# EUROPEAN PATENT APPLICATION

(11) **EP 1 155 886 A1**
(43) Date of publication of application: **21.11.2001**
(21) Application number: 98957160.9
(22) Date of filing: 04.12.1998
(51) Int. Cl.: B60H 1/26

(54) **SAFETY DEVICE FOR VEHICLES**

(71) Applicant: Zexel Valeo Climate Control Corporation, Ohsato-gun, Saitama 360-0193 (JP)
(72) Inventor: FURUYA, Shunichi c/o Zexel Valeo Climate Cont.Corp, Osato-gun,Saitama 360-0193 (JP); MUTA, Shunji c/0 Zexel Valeo Climate Contr.Corp., Osato-gun, Saitama 360-0193 (JP); IIJIMA, Kenji Zexel Corporation Konan Factory, Osato-gun Saitama 360-0193 (JP); KANAI, Hiroshi c0 Zexel Valeo Climate Contr.Corp., Osato-gun Saitama 360-0193 (JP)
(74) Representative: Gesthuysen, von Rohr & Eggert
(86) International application number: JP9805468
(87) International publication number: WO0034065

(57) **Abstract**

A safety apparatus for a vehicle which is provided near an air-conditioning system installed in the vehicle, has a function of discharging leaked carbon dioxide to the outside if a carbon dioxide leak is detected. If a carbon dioxide leak is detected by a means for carbon dioxide leak detection, a means for air blowing provided inside a duct communicating between the bottom portion within the cabin and the outside of the cabin is engaged by a means for drive, to discharge carbon dioxide accumulating near the bottom inside the cabin to the outside of the cabin.

## Description

### TECHNICAL FIELD

The present invention relates to a safety apparatus for a vehicle that assures the safety of passengers in a vehicle mounted with an air-conditioning system which uses carbon dioxide as the coolant in the event of a carbon dioxide leak.

### BACKGROUND ART

Freezing cycles that use carbon dioxide as the coolant in the prior art include the super-critical vapor compression cycle disclosed in Japanese Examined Patent Publication No. H7-18602 that comprises, at least, a compressor, a cooler, a means for constriction and an evaporator. Super-critical coolants that may be used in this cycle include, for instance, ethylene (C₂H₄), diborane (B₂H₆), ethane (C₂H₆), nitrogen oxide (N₂O) and carbon dioxide (CO₂). Among these, carbon dioxide in particular is often used.

This super-critical vapor compression cycle represents an example of a non-freon freezing cycle to replace freon freezing cycles and freezing cycles using carbon dioxide are considered to be a particularly promising replacement for freon freezing cycles.

However, since the critical point of carbon dioxide is approximately 31.1°C and is fairly low, the outside air temperature may exceed the critical point in the summertime. In addition, during a freezing cycle operation, too, the high-pressure line (extending from the compressor to the means for constriction) in the freezing cycle naturally constitutes a super-critical range, and the pressure in the super-critical range exceeding the critical point, which is determined in correspondence to the concentration and the temperature, may exceed 20 MPa when the temperature is high. Accordingly, it is necessary to improve the pressure withstanding performance of the various parts constituting the freezing cycle, and it is crucial to reach the optimal compromise in a heat exchanger or the like, in particular, in which the heat exchanging capability and the pressure withstanding performance are conflicting interests. This means that, an impact resulting from a collision or the like may damage the parts constituting the freezing cycle and in the worst scenario, such damage to the parts may cause the carbon dioxide coolant to leak into and stagnate in the cabin.

The hazard information in the "Product Safety Data Sheet" related to the adverse effects of the toxicity of carbon dioxide on the human body reveals that the work performance becomes poorer at a carbon dioxide concentration (VOL%) of 3%, considerable nausea is experienced at 4%, the person is panting seriously at 5% with symptoms of poisoning manifesting after the exposure to the atmosphere with a 5% concentration for 30 minutes, the limits of tolerance is reached at 7 ~ 9% and the person loses control functions at 10 ~ 11% resulting in loss of consciousness after 10 minutes of exposure. Thus, it is extremely important to take safety measures against carbon dioxide leakage.

Accordingly, an object of the present invention is to provide a safety apparatus for a vehicle installed near the air-conditioning system mounted in the vehicle and having a function of discharging carbon dioxide to the outside if a carbon dioxide leak is detected.

### DISCLOSURE OF THE INVENTION

In order to achieve the object described above, according to the present invention, a safety apparatus for a vehicle mounted with an air-conditioning system for vehicles having, at least, an evaporator provided inside an air-conditioning duct located within the cabin, which uses carbon dioxide as the coolant, comprises a means for carbon dioxide leak detection that detects a carbon dioxide leak, a duct communicating between an area in the bottom portion of the cabin and the outside of the cabin, a means for air blowing provided within the duct and a means for drive that drives the means for air blowing if it is decided by the means for carbon dioxide leak detection that a carbon dioxide leak has occurred.

Since the means for air blowing provided inside the duct communicating between the bottom portion inside the cabin and the outside of the cabin is engaged in operation by the means for drive if the means for carbon dioxide leak detection detects a carbon dioxide leak, carbon dioxide accumulating toward the bottom inside the cabin can be discharged to the outside of the cabin, thereby assuring the safety of passengers.

It is desirable that the duct communicate between a lower position near the evaporator inside the cabin and the outside of the cabin to discharge carbon dioxide leaking from the evaporator with a high degree of reliability, since carbon dioxide leaking into the cabin originates from an area near the of the operator.

The safety apparatus for a vehicle is driven by the car battery and is provided with a means for auxiliary power supply to which it is connected if it becomes disconnected from the car battery. While the safety apparatus is likely to be disconnected from the main power supply or the main power supply itself is likely to be damaged in the event of a leakage caused by damage resulting from an accident or the like, leaked carbon dioxide can be discharged with a high degree of reliability even if the safety apparatus is a disconnected from the main power supply by providing the means for auxiliary power supply.

Furthermore, it is desirable to constitute the means for carbon dioxide leak detection with a carbon dioxide detection sensor provided at a low position inside the cabin. With the carbon dioxide detection sensor installed at such a position, any carbon dioxide leakage can be detected with reliability.

Alternatively, the means for carbon dioxide leak detection may be constituted of a pressure sensor that detects the pressure at the freezing cycle. Since a carbon dioxide leak can also be detected by sensing a reduction in the pressure at the freezing cycle and this structure does not require a special carbon dioxide detection sensor to be provided, a great reduction in production costs is achieved while it is not possible to exclusively detect a carbon dioxide leak into the cabin.

Moreover, it is desirable to install the safety apparatus for a vehicle at a lower position relative to the cabin door.

### BRIEF DESCRIPTION OF THE DRAWINGS

FIG. 1 is a schematic block diagram of an air-conditioning system for vehicles;
FIG. 2(a) is a schematic side view and FIG. 2(b) is a schematic plan view, both provided to indicate the position at which the safety apparatus for a vehicle is installed;
FIG. 3 a schematic illustration of a front cabin door at which the safety apparatus for a vehicle is installed;
FIG. 4 is a schematic block diagram of the safety apparatus for a vehicle; and
FIG. 5 is a flow chart of the operation achieved by the safety apparatus for a vehicle.

### THE BEST MODE FOR CARRYING OUT THE INVENTION

The following is a detailed explanation of the present invention, given in reference to the attached drawings.

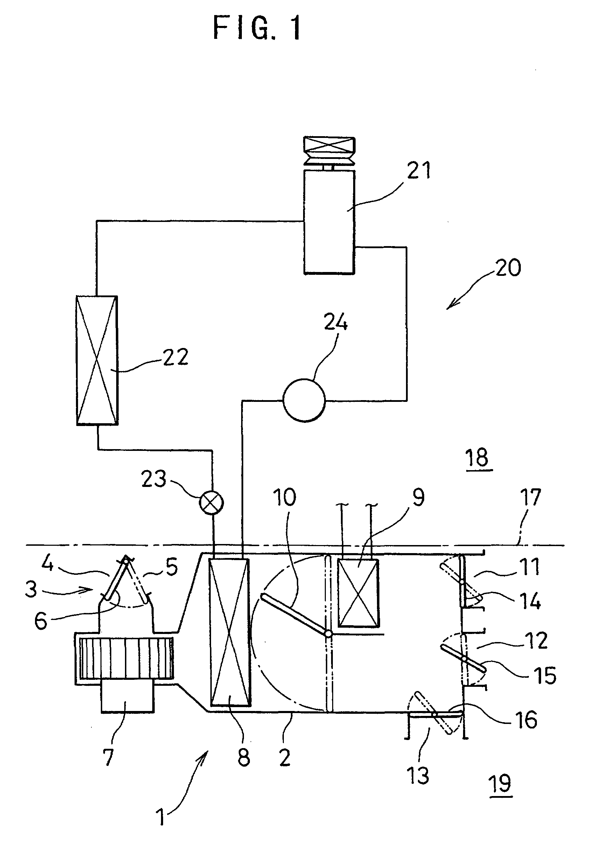

In FIG. 1, an air-conditioning system 1 for vehicles is provided with an air-conditioning duct 2 located inside a cabin 19 which is partitioned from an engine room 18 by a fire-wall 17. An intake unit 3, which is provided on the upstream-most side of the air-conditioning duct 2, includes an internal air induction port 4 communicating with the inside of the cabin and an external air induction port 5 communicating with the outside of the vehicle, as well as an intake unit 6* which selectively opens/closes the internal air induction port 4 and the external air induction port 5.

An air blower 7 is provided on the downstream side of the intake unit 3 and an evaporator 8 constituting a cooling heat exchanger is provided further on the downstream side.

The air having passed through the evaporator 8 is separated at a mixing door 10 into air to pass through a heater core 9 provided on the downstream side of the evaporator 8 and air to bypass the heater core, which are then mixed on the downstream side of the heater core to achieve a desired temperature. The mixed air achieving the desired temperature is then let out into the cabin 19 through an outlet opening into the cabin 19 which is opened/closed by a mode door 14, 15 or 16, e.g., a defrost outlet 11, a vent outlet 12 or a foot outlet 13, to control the temperature of the air inside the cabin.

A freezing cycle 20 employed in the air-conditioning system 1 for vehicles adopting the structure described above is a super-critical freezing cycle which uses carbon dioxide as the coolant and comprises, at least, a compressor 21, a radiator 22, an expansion valve 23 and an accumulator 24.

In the freezing cycle 20, the coolant having been compressed to the super-critical range by the compressor 21 is cooled down at the radiator 22 while remaining in the gas phase and its pressure is then lowered at the expansion valve 23 until it enters a gas/liquid mixed state. The coolant in the gas/liquid mixed state undergoes a process of endothermic evaporation at the evaporator 8 to become a gas phase coolant, which, in turn, undergoes gas/liquid separation at the accumulators 24 and is taken into the compressor 21. The freezing cycle 20, thus constitutes a heat pump cycle in which the heat absorbed at the evaporator 8 is discharged at the radiator 22.

If the evaporator 8 provided within the air-conditioning duct 2 in the cabin 19 or piping or the like near the evaporator 8 becomes damaged due to a collision, an abnormal increase in the high-pressure at the freezing cycle 20 or the like in the air-conditioning system 1 for vehicles structured as described above, carbon dioxide inside the freezing cycle 20 leaks into and stagnates in the cabin 19, presenting a risk to the safety of the passengers.

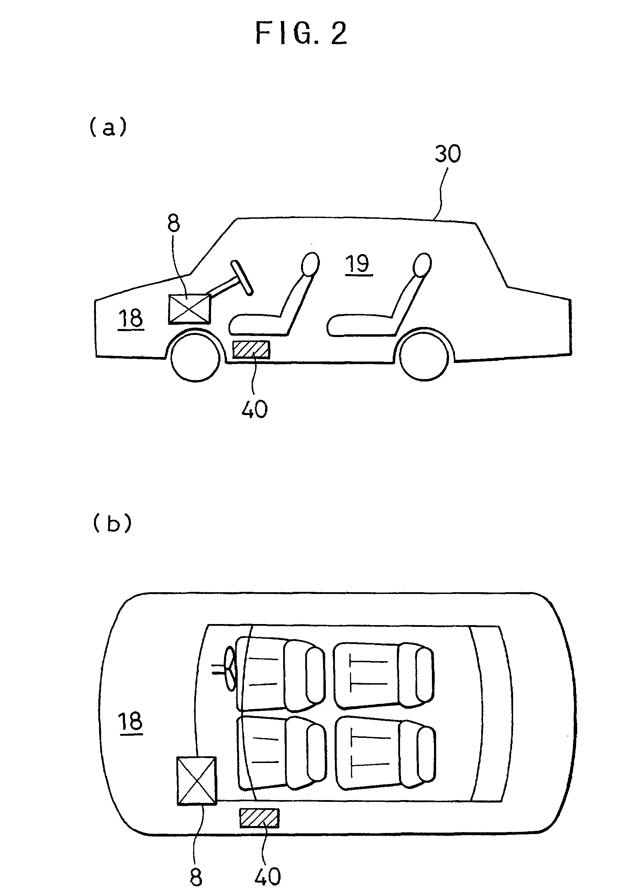

Accordingly, as illustrated in FIGS. 2(a) and 2(b), it is desirable to provide a safety apparatus 40 for vehicles at a lower position near the evaporator inside the cabin 19 which discharges carbon dioxide that accumulates near the bottom inside the cabin.

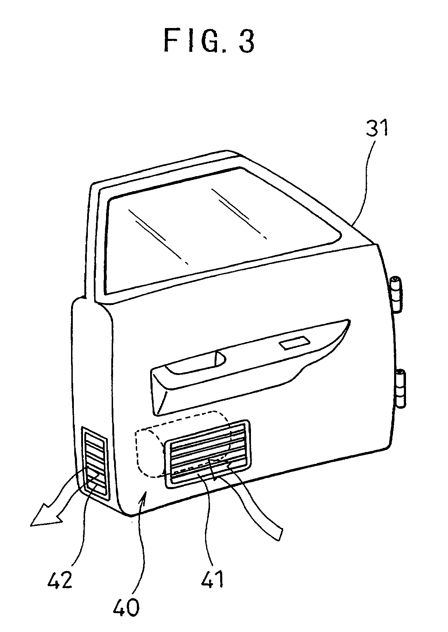

FIG. 3 presents an example in which the safety apparatus 40 for a vehicle is installed at a front cabin door at a lower position near the evaporator 8, with reference number 41 indicating the cabin-side intake port and reference number 42 indicating an external outlet.

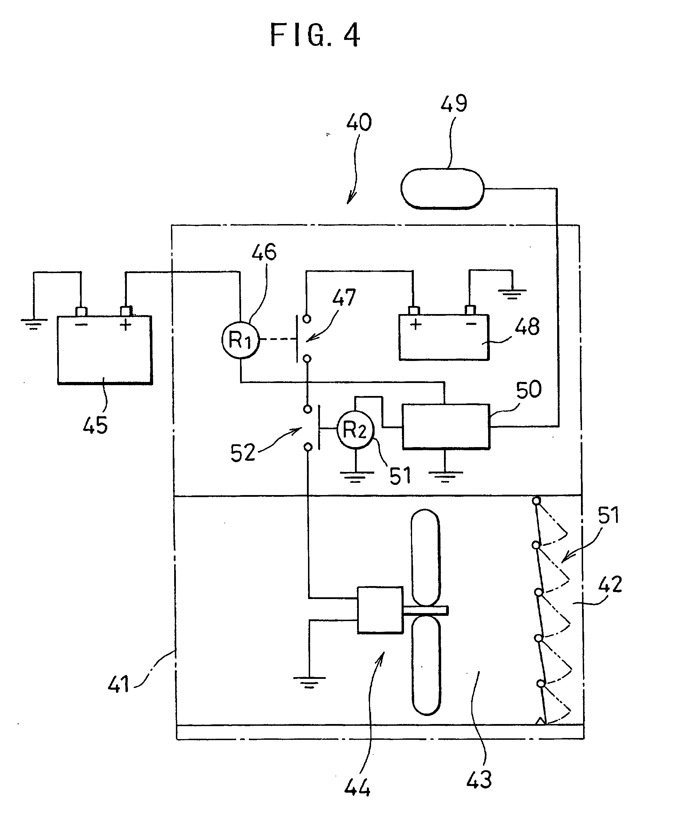

This safety apparatus 40 for a vehicle may be constituted as shown in FIG. 4, for instance, and comprises a discharge duct 43 communicating between the cabin-side intake port 41 and the external outlet 42, an air blower 44 provided inside the discharge duct 43, a carbon dioxide concentration detection sensor 49 that detects the concentration of carbon dioxide and a control unit 50 that drives the air blower 44 by making a decision with regard to the results of the detection input thereto from the carbon dioxide concentration detection sensor 49. It is desirable to set the cabin-side intake port 41 so as to allow it to open at a position which is within 10 cm off the floor surface of the cabin 19, whereas it is desirable to install the carbon dioxide concentration detection sensor 49 at a position near the evaporator 8, within approximately 10 cm of the bottom of the cabin 19.

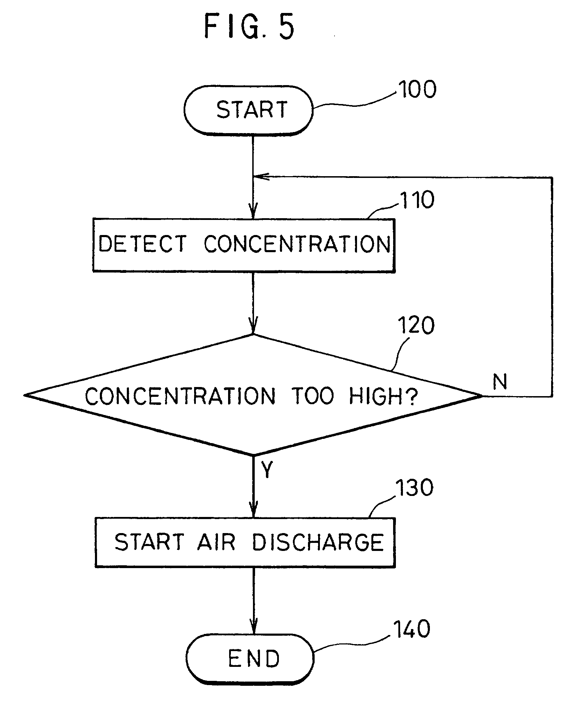

The control unit 50 may execute control such as that shown in FIG. 5. The control which starts at step 100 commences when a battery (main power supply battery) 45 constituting the main power supply becomes connected, regardless of whether or not the ignition switch is turned on. In step 110, the results of a detection performed by the carbon dioxide concentration detector 49 are read and a decision is made in step 120 as to whether or not the detection results indicate a dangerous concentration level. Based upon the hazard information in the "Product Safety Data Sheet", the reference value used in the decision-making process with regard to the dangerous concentration level in the embodiment is set at 5% or higher. Accordingly, if the detected carbon dioxide concentration is under 5%, the operation returns to step 110 and the decision-making operation in steps 110 and 120 is repeated.

If it is decided that the carbon dioxide concentration is at a dangerous level through the decision-making process in step 120, the operation proceeds to step 130 to engage a relay R2 to turn on a switch 52 and engage the air blower 44 in an operation. The air discharge ends in step 140 and the operation is resumed in step 100 after a specific length of time elapses.

Thus, since carbon dioxide accumulating near the floor of the cabin 19 is discharged to the outside of the vehicle by the air blower 44 if the carbon dioxide concentration is determined to be at a dangerous level, the safety of the passengers inside the cabin is assured.

In addition, the safety apparatus 40 for a vehicle is provided with an auxiliary power supply circuit comprising an auxiliary power supply battery 48, a relay R1 and a switch 47.

In this auxiliary power supply circuit, which is constituted of the relay R1 provided at the main power supply battery circuit and the "b" contact-point switch 47 provided between the auxiliary power supply battery 48 and the switch 52, the auxiliary power supply battery 48 becomes connected as the connection with the main power supply battery 45 is disrupted and almost instantaneously the "b" contact-point switch 47 is reset. As a result, even if the connection with the main power supply battery 45 becomes cut off due to an accident or the like, the safety apparatus 40 for a vehicle can be engaged in operation.

Furthermore, a shutter 51, which is opened when the air blower 44 is engaged in operation and normally blocks the output 42, may be provided at the outlet 42 of the safety apparatus 40 for a vehicle.

Alternatively, a pressure sensor that detects the pressure at the freezing cycle 20 may be provided instead of the carbon dioxide concentration detection sensor 49. In this case, a carbon dioxide leak can be detected by sensing a reduction in the pressure at the freezing cycle 20 with the pressure sensor.

### INDUSTRIAL APPLICABILITY

As described above, according to the present invention, since the safety of passengers can be assured by detecting any carbon dioxide leak occurring inside the cabin of a vehicle provided with a freezing cycle which uses carbon dioxide as a coolant and by discharging leaking carbon dioxide to the outside of the vehicle, the freezing cycle that uses carbon dioxide as a coolant can be adopted in an air-conditioning system for vehicles in place of a freon freezing cycle.

## Claims

1. A safety apparatus for a vehicle mounted with an air-conditioning system for vehicles which uses carbon dioxide as a coolant, having, at least, an evaporator provided inside an air-conditioning duct located in a cabin, **characterized by** comprising;
a means for carbon dioxide leak detection that detects a carbon dioxide leak;
a duct communicating between a lower portion inside the cabin and outside of the cabin;
a means for air blowing provided inside said duct; and
a means for drive that drives said means for air blowing if said means for carbon dioxide leak detection determines that a carbon dioxide leak has occurred,

2. A safety apparatus for a vehicle according to claim 1, **characterized in that** said duct communicates between a lower portion inside the cabin near said evaporator and the outside of the cabin.

3. A safety apparatus for a vehicle according to claim 1 or 2, **characterized in that** said safety apparatus for a vehicle is driven by a car battery and is provided with a means for auxiliary power supply to which said safety apparatus is connected if said safety apparatus becomes disconnected from said car battery.

4. A safety apparatus for a vehicle according to claim 1, 2 or 3, **characterized in that** said means for carbon dioxide leak detection is constituted of a carbon dioxide detection sensor provided at a lower position inside the cabin.

5. A safety apparatus for a vehicle according to claim 1, 2 or 3, **characterized in that** said means for carbon dioxide leak detection is constituted of a pressure sensor that detects the pressure at said freezing cycle.

6. A safety apparatus for a vehicle according to any of claims 1 through 5, **characterized in that** said duct, which is located near and below said evaporator and communicates between a lower portion of a front cabin door and the outside of the cabin.
